# EUROPÄISCHE PATENTSCHRIFT

(11) **EP 4 028 724 B1**
(45) Veröffentlichungstag und Bekanntmachung des Hinweises auf die Patenterteilung: **07.02.2024**
(21) Anmeldenummer: 20746952.9
(22) Anmeldetag: 27.07.2020
(51) Int. Cl.: G01B 21/04, B21D 28/14, B21D 28/34, B21D 37/20

(54) **RÜSTVORRICHTUNG SOWIE VERFAHREN ZUM RÜSTEN EINES WERKZEUGES ZUM STANZEN ODER UMFORMEN VON PLATTENFÖRMIGEN MATERIALIEN**
EQUIPPING DEVICE AND METHOD FOR EQUIPPING A TOOL FOR STAMPING OR FORMING PLANAR MATERIALS
DISPOSITIF D'ÉQUIPEMENT ET PROCÉDÉ POUR ÉQUIPER UN OUTIL POUR L'ESTAMPAGE OU LE FORMAGE DE MATÉRIAUX PLATS

(30) Priorität: 11.09.2019 DE 102019124366
(43) Veröffentlichungstag der Anmeldung: 20.07.2022
(73) Patentinhaber: TRUMPF Werkzeugmaschinen SE + Co. KG, 71254 Ditzingen (DE)
(72) Erfinder: KLINKHAMMER, Marc, 71254 Ditzingen (DE); OCKENFUSS, Simon, 71272 Renningen (DE)
(74) Vertreter: Trumpf Patentabteilung
(86) Internationale Anmeldenummer: PCT/EP2020/071122
(87) Internationale Veröffentlichungsnummer: WO 2021/047811

(56) Entgegenhaltungen:
- EP-A1- 0 417 836
- EP-A1- 2 913 116
- WO-A1-2018/055185
- DE-A1-102007 008 698

## Beschreibung

Die Erfindung betrifft eine Rüstvorrichtung zum Rüsten eines Werkzeuges zum Stanzen oder Umformen von plattenförmigen Materialien sowie ein Verfahren hierzu.

Werkzeuge zum Umformen oder Stanzen umfassen einen Stempel und eine Matrize sowie vorzugsweise einen dazwischen angeordneten Abstreifer. Diese Stanz- und Umformwerkzeuge werden in Bearbeitungsmaschinen zur Bearbeitung von plattenförmigen Materialien, insbesondere Blechen, eingesetzt. Solche Werkzeuge unterliegen aufgrund der Bearbeitung einem Verschleiß, das heißt, dass zumindest eine Schneide des Stempels und/oder der Matrize nicht mehr die erforderliche Schärfe aufweisen und so zu einer Ungenauigkeit oder einer verringerten Qualität in der Bearbeitung führen. Es ist daher erforderlich, solche Werkzeuge nachzuschleifen. Zudem weist dies den Vorteil auf, dass die Werkzeuge über eine lange Betriebsdauer verwendet werden können.

Nach dem Nachschleifen der Werkzeuge verändert sich die Länge des Stempels und/oder die Höhe der Matrize. Es ist deshalb erforderlich, diese Werkzeuge bezüglich der tatsächlichen Maße zu erfassen, damit diese von der Bearbeitungsmaschine bei den angesteuerten Stanz-, Umform- und Schneidprozessen zumindest im Hinblick auf die zu bearbeitende Materialstärke des plattenförmigen Materials berücksichtigt werden.

Es ist bereits ein Rüstgerät bekannt, bei welchem ein Stempel des Werkzeuges in eine Stempelaufnahme eingesetzt wird, um eine Stempellänge zu erfassen. Darauffolgend wird nach der Entnahme des Stempels eine Matrize in das Rüstgerät eingesetzt, um eine Matrizenhöhe zu erfassen. Darauffolgend wird der Stempel wieder eingesetzt, um eine Eintauchtiefe des Stempels in die Matrize zu erfassen. Diese erfassten Einzelwerte werden anschließend einander zugeordnet und an die Bearbeitungsmaschine weitergeleitet.

Das Dokument WO 2018/055185 A1 offenbart eine Rüstvorrichtung für ein Werkzeug zum Stanzen oder Umformen von plattenförmigen Materialien gemäß dem Stand der Technik.

Der Erfindung liegt die Aufgabe zugrunde, eine Rüstvorrichtung sowie ein Verfahren zum Rüsten von Werkzeugen zum Stanzen und Umformen von plattenförmigen Materialien vorzuschlagen, durch welche eine Reduzierung der Rüstzeit für den Rüstvorgang ermöglicht ist.

Diese Aufgabe wird durch eine Rüstvorrichtung für Werkzeuge zum Stanzen oder Umformen von plattenförmigen Materialien, welche zumindest einen Stempel oder eine Matrize umfassen, gelöst, in welche der Stempel in einer Stempelaufnahme und eine Matrize in einer Matrizenaufnahme einsetzbar ist, sowie die Stempelaufnahme zumindest entlang einer Führung auf die Matrizenaufnahme zu bewegbar ist, wobei die Stempelaufnahme entlang der Führung in eine Messposition überführbar ist, in welche der Stempel auf einer Messoberfläche eines Messgegenstandes aufliegt und der Messgegenstand mit seiner Unterseite auf der Matrize aufliegt, wobei in dieser Messposition ein Abstand der Stempelaufnahme zu einem Nullpunkt der Matrizenaufnahme und ein Abstand des Messgegenstandes zum Nullpunkt der Matrizenaufnahme erfassbar ist sowie mit einer Auswerteeinrichtung die von der Messvorrichtung erfassten Abstände auswertbar sind und die Auswerteeinrichtung eine Stempellänge des Stempels und eine Matrizenhöhe der Matrize oder einer Matrizenhöhe der Matrize mit Matrizenteller ausgibt. Diese Rüstvorrichtung weist den Vorteil auf, dass in einem Arbeitsschritt beziehungsweise Prüfschritt sowohl die Länge des Stempels als auch die Höhe der Matrize mit oder ohne Matrizenteller erfassbar sind. Dadurch kann eine Zeitreduzierung bei der Rüstung erzielt werden.

Des Weiteren ist bevorzugt der Messgegenstand als eine Messplatte, vorzugsweise mit einer definierten Stärke der Messplatte, ausgebildet. Dadurch wird die Erfassung der Stempellänge sowie der Matrizenhöhe vereinfacht, da ausgehend von einem Nullpunkt der Matrizenhöhe in einfacher Weise sowohl die Auflagefläche der Matrize als auch die Länge des Stempels erfasst werden kann. Dies beruht bei der Ermittlung der Stempellänge insbesondere darauf, dass ein Grundkörper des Stempels oder ein Justierring des Stempels in einer definierten Lage in der Stempelaufnahme positioniert ist, sodass dadurch ein definiertes Maß für die Erfassung des Abstands der Stempelaufnahme zum Nullpunkt der Matrize erfassbar ist.

Des Weiteren ist bevorzugt der Messgegenstand aus einer Nichtgebrauchsposition in die Messposition zwischen dem Stempel in der Stempelaufnahme und der Matrize in der Matrizenaufnahme überführbar. Dies kann manuell erfolgen. Auch können Antriebe vorgesehen sein, durch welche eine solche Verfahrbewegung angesteuert wird. Somit kann durch eine einfache Verfahrbewegung, insbesondere Einschwenkbewegung, der Messgegenstand oder ein Endmaß, welches nicht mit der Rüstvorrichtung verbunden ist, in eine Messposition übergeführt werden, um darauffolgend durch eine Verfahrbewegung der Stempelaufnahme auf die Matrizenaufnahme die Erfassung der Stempellänge und der Matrizenhöhe zu ermöglichen.

Bevorzugt ist nach der Erfassung der Stempellänge und der Matrizenhöhe der Messgegenstand in die Nichtgebrauchsposition verfahrbar und die Stempelaufnahme entlang der Führung in Richtung auf die Matrize verfahrbar und ein Eintauchen des Stempels in eine Öffnung der Matrize durch die Messeinrichtung erfassbar. Dadurch kann eine Eintauchprüfung durchgeführt werden, um sicherzustellen, dass die Ausrichtung des Stempels zur Matrize beziehungsweise Matrizenöffnung vorliegt. Gleichzeitig kann daraus das Vorhandensein eines Schnittspaltes erfasst werden.

Eine weitere vorteilhafte Ausgestaltung der Rüstvorrichtung sieht vor, dass der Messgegenstand entlang der Führung oder einer separaten Säule verfahrbar ist. Beispielsweise kann der Messgegenstand mit Abstand zur Matrizenaufnahme und Stempelaufnahme vorgesehen sein, sodass ein kollisionsfreies Einschwenken zwischen dem Stempel und der Matrize möglich ist. Darauffolgend kann automatisch beim Absenken der Stempelaufnahme auf die Matrize die Messposition zur Erfassung der Stempellänge und der Matrizenhöhe eingenommen werden.

Bevorzugt umfasst die Rüstvorrichtung eine Abstreiferaufnahme, welche zwischen der Matrizenaufnahme und der Stempelaufnahme vorgesehen und vorzugsweise ebenfalls entlang der Führung verfahrbar ist. Eine Vielzahl der Werkzeuge zum Stanzen oder Umformen umfassen solche Abstreifer beziehungsweise Niederhalter. Zur Erfassung einer notwendigen Eintauchtiefe des Stempels in die Matrize ist der Abstreifer zu berücksichtigen, sofern dieser beim Werkzeug eingesetzt wird.

Zur Erfassung der Eintauchtiefe des Stempels in die Matrize ist bevorzugt die Stempelaufnahme entlang der Führung auf die Messposition zur Anlage am Messgegenstand überführbar, in welcher der in der Abstreiferaufnahme angeordnete Abstreifer am Grundkörper oder Justierring des Stempels anliegt und die Messeinrichtung den Abstand zwischen dem Nullpunkt der Matrize und der Abstreiferaufnahme erfasst. Durch die Differenz zwischen dem Abstand der Abstreiferaufnahme zum Nullpunkt der Matrizenaufnahme sowie der erfassten Stempellänge kann die Eintauchtiefe des Stempels erfasst werden. Die Eintauchtiefe ist die freie Länge des Stempels, welche in die Öffnung der Matrize sowohl Vorhandensein als auch Nichtvorhandensein eines Abstreifers eintauchen kann. Diese Eintauchtiefe des Stempels ist bei Stanzwerkzeugen zu berücksichtigen, da die erforderliche Eintauchtiefe für die Bearbeitung eines plattenförmigen Materials zumindest die Dicke des plattenförmigen Materials und ein Eintauchen des Stempels in die Öffnung der Matrize umfassen soll.

Des Weiteren ist bevorzugt vorgesehen, dass die Messeinrichtung aus den erfassten Daten einen werkzeugspezifischen Datensatz für die Bearbeitungsmaschine generiert. Dieser Datensatz wird an die Bearbeitungsmaschine weitergeleitet, sodass für die nachfolgende Bearbeitung eines plattenförmigen Materials die tatsächlichen Maße des Bearbeitungswerkzeugs berücksichtigt werden. Auch kann der Datensatz an eine Datenbank oder eine Cloud weitergeleitet werden. Die Bearbeitungsmaschine und/oder die Steuerung können darauf Zugriff haben.

Vorteilhafterweise ist die Stempelaufnahme entgegen einem Rückstellelement in die Messposition verfahrbar und vorzugsweise selbständig durch das Rückstellelement in die Ausgangsposition zurückfahrbar. Dies ermöglicht eine einfache Bedienung.

Vorteilhafterweise ist beim Vorhandensein eines Abstreiferelementes ebenfalls ein Rückstellelement vorgesehen, entgegen dem die Abstreiferaufnahme in die Messposition verfahrbar und vorzugsweise selbständig durch das Rückstellelement in die Ausgangsposition wieder zurückführbar ist. Alternativ können zumindest die Ausgangsposition und die Messstation der Stempelaufnahme und/oder des Abstreifers durch einen Antrieb angesteuert werden.

Die Rüstvorrichtung weist bevorzugt ein Grundgestell auf, in welchem die Matrizenaufnahme vorgesehen und an welchem die zumindest eine Führung für die Stempelaufnahme und vorzugsweise Abstreiferaufnahme angeordnet ist.

Die Stempelaufnahme und/oder die Abstreiferaufnahme und/oder die Matrizenaufnahme weisen bevorzugt zur vorderen Stirnseite des Grundgestells weisend jeweils eine Einsetzöffnung auf, welche zumindest ein lösbares Verbindungselement zum Fixieren des Stempels und/oder des Abstreifers und/oder der Matrize in der jeweiligen Aufnahme aufweist. Dadurch kann in einfacher Weise eine manuelle Positionierung des Stempels und/oder des Abstreifers und/oder der Matrize in der jeweiligen Aufnahme erfolgen. Auch kann ein prozessunterstütztes Einsetzen des Stempels und/ oder des Abstreifers und/oder der Matrize durch ein Hilfswerkzeug gemeinsam erfolgen.

Die Stempelaufnahme und gegebenenfalls das Abstreiferelement sind bevorzugt zur Matrizenaufnahme in eine Wechselposition überführbar und vorzugsweise in dieser Wechselposition durch eine Hebelanordnung oder durch eine ansteuerbare Verriegelung arretierbar. Die ansteuerbare Verriegelung kann elektrisch, pneumatisch, hydraulisch oder magnetisch ansteuerbar sein. Dies ermöglicht, dass anschließend, beispielsweise durch eine Kassette, durch welche das Werkzeug auch in der Bearbeitungsmaschine in einem Magazin gehalten ist, in einfacher Weise aus der Rüstvorrichtung entnommen werden kann.

Am Grundgestell der Rüstvorrichtung ist bevorzugt eine Schublade zur Aufnahme einer Kassette für das Werkzeug vorgesehen, welche den Stempel, vorzugsweise den Abstreifer, und die Matrize oder die Matrize mit dem Matrizenteller aufnimmt. In Vorbereitung der Entnahme des gesamten Werkzeugs aus der Rüstvorrichtung nach der Messung kann die Kassette in die Schublade eingesetzt werden, um darauffolgend eine Entnahme des Werkzeuges durch Schließen und wieder Öffnen der Schublade zu ermöglichen.

Die Kassette zur Aufnahme des Werkzeuges weist bevorzugt Greifelemente für den Stempel und vorzugsweise den Abstreifer und die Matrize auf, deren Greifkraft nach dem Greifen des Stempels und vorzugsweise des Abstreifers und der Matrize größer als eine Haltekraft der lösbaren Verbindungselemente in der Einsatzöffnung der Stempelaufnahme, vorzugsweise der Abstreiferaufnahme und der Matrizenaufnahme, ist. Dadurch kann ein einfaches Lösen des Werkzeuges beim Abziehen der Kassette von den Aufnahmen ermöglicht sein.

Bevorzugt ist ein Kalibriernormal für die Rüstvorrichtung vorgesehen, durch welche ein definierter Abstand vom Nullpunkt der Matrizenaufnahme zur Stempelaufnahme und vorzugsweise vom Nullpunkt der Matrizenaufnahme zur Abstreiferaufnahme einstellbar ist. Dieses Kalibrier-normal ist in die Matrizenaufnahme einsetzbar. Darauffolgend können die Stempelaufnahme und vorzugsweise die Abstreiferaufnahme auf das Kalibriernormal aufgesetzt werden, um anschließend eine Kalibrierung der Messeinrichtung bezüglich der jeweiligen Abstände vorzunehmen.

Die Rüstvorrichtung weist bevorzugt am Grundgestell eine Kassettenaufnahme mit einem Entriegelungselement auf. Dies ermöglicht, dass die Kassette, welche den Stempel, vorzugsweise das Abstreiferelement und die Matrize, aufnimmt und in der Kassettenaufnahme positionierbar ist. Darauffolgend kann mit dem Entriegelungselement ein Öffnen der Kassette, insbesondere ein Öffnen oder Entriegeln der Greifelemente, erfolgen, sodass der Stempel, vorzugsweise der Abstreifer und die Matrize, in einfacher Weise aus der Kassette entnommen werden können, um diese in die Stempelaufnahme, vorzugsweise in die Abstreiferaufnahme und in die Matrizenaufnahme, einzusetzen.

Die der Erfindung zugrundeliegende Aufgabe wird des Weiteren durch ein Verfahren zum Rüsten eines Werkzeuges zum Stanzen oder Umformen von einem plattenförmigen Material mit einer Rüstvorrichtung gelöst, welche zumindest eine Stempelaufnahme und eine Matrizenaufnahme sowie zumindest eine Führung umfasst, durch welche die Stempelaufnahme auf die Matrizenaufnahme zu bewegbar ist, bei dem der Stempel in die Stempelaufnahme eingesetzt wird und die Matrize in die Matrizenaufnahme eingesetzt wird und die Stempelaufnahme entlang der Führung auf die Matrizenaufnahme zubewegt wird, um die Stempelaufnahme in eine Messposition überzuführen, in welcher der Stempel auf einer Messoberfläche eines Messgegenstandes aufliegt, der mit seiner Unterseite auf der Matrize positioniert wird und durch eine Messeinrichtung ein Abstand der Stempelaufnahme zu einem Nullpunkt der Matrizenaufnahme und ein Abstand des Messgegenstandes zum Nullpunkt der Matrizenaufnahme erfasst wird. Durch eine Auswerteeinrichtung die von der Messvorrichtung erfassten Abstände ausgewertet werden und darauffolgend eine Länge des Stempels und eine Höhe der Matrize ausgegeben werden. Die Matrizenhöhe kann eine Matrize ohne Matrizenteller als auch eine Matrize mit Matrizenteller sowie vorzugsweise dazwischen angeordneten Distanzelementen umfassen. Durch eine Verfahrbewegung beziehungsweise eine Zustellbewegung der Stempelaufnahme auf die Matrize in den Messpunkt können sowohl die Länge des Stempels als auch die Höhe der Matrize gleichzeitig erfasst werden. Dadurch kann eine Reduzierung der Rüstzeit ermöglicht werden.

Eine vorteilhafte Ausgestaltung des Verfahrens sieht vor, dass vor dem Überführen der Stempelaufnahme in die Messposition der Messgegenstand aus einer Nichtgebrauchsposition in die Messposition zwischen dem Stempel in der Stempelaufnahme und der Matrize in der Matrizenaufnahme übergeführt wird.

Dadurch kann eine verbesserte Einsatzbereitschaft der Rüstvorrichtung für die Messung der Stempellänge und der Matrizenhöhe erzielt werden.

Nach der Erfassung der Stempellänge und der Matrizenhöhe wird der Messgegenstand in die Nichtgebrauchsposition verfahren und die Stempelaufnahme entlang der Führung auf die Matrize zubewegt, sodass durch die Messeinrichtung ein Eintauchen des Stempels in die Öffnung der Matrize erfasst. Dadurch kann eine Eintauchprüfung erfolgen, um sicherzustellen, dass die Matrize und der Stempel auch zueinander passen oder zueinander ausgerichtet sind und gemeinsam das Werkzeug bilden.

Eine weitere vorteilhafte Ausgestaltung des Verfahrens sieht vor, dass die Rüstvorrichtung eine Abstreiferaufnahme umfasst, in welcher ein Abstreifer eingesetzt ist und die Stempelaufnahme mit dem eingesetzten Stempel entlang der Führung auf die Messposition verfahren wird, wobei während der Verfahrbewegung der Abstreifer am Grundkörper oder Justierelement des Stempels anliegt und die Abstreiferaufnahme durch die Stempelaufnahme entlang der Führung verfahren wird. Die Messeinrichtung kann darauffolgend einen Abstand zwischen dem Nullpunkt der Matrize und der Abstreiferaufnahme sowie einen Abstand zwischen dem Nullpunkt der Matrize und der Stempelaufnahme erfassen. Die Dicke des Messgegenstandes, der auf der Matrize aufliegt, ist in der Messeinrichtung hinterlegt. Daraufhin können sowohl die Länge des Stempels, die Matrizenhöhe als auch die Eintauchtiefe des Stempels bei einem Werkzeug mit einem Abstreifer in die Matrize erfasst werden.

Des Weiteren bilden bevorzugt die durch die Messeinrichtung erfassten Messwerte von dem Werkzeug in der Rüstvorrichtung einen werkzeugspezifischen Datensatz, der an die Datenbank, eine Cloud oder an die Bearbeitungsmaschine weitergeleitet wird. Dies kann kabellos oder kabelgebunden erfolgen. Somit kann die Bearbeitungsmaschine mit den exakten erfassten geometrischen Daten des Werkzeuges die Arbeitsschritte ansteuern.

Des Weiteren werden bevorzugt nach der Durchführung der Messung des Werkzeuges die Stempelaufnahme und vorzugsweise die Abstreiferaufnahme in eine Wechsellage zur Matrizenaufnahme verfahren und arretiert. Die Matrizenaufnahme ist vorzugsweise fest in der Rüstvorrichtung, insbesondere im Grundgestell der Rüstvorrichtung, vorgesehen. Diese Wechsellage kann beispielsweise durch eine Arretierung eingenommen werden. Beispielsweise kann ein Schwenkhebel einer Hebelanordnung die entlang der Führung verfahrene Stempelaufnahme und vorzugsweise Abstreiferaufnahme in der Wechsellage arretieren.

Bevorzugt ist im Grundgestell eine Schublade zur Aufnahme einer Kassette vorgesehen, welche zur Entnahme des Werkzeugs geöffnet wird, um die Kassette einzusetzen, sodass darauffolgend durch das Schließen der Schublade die Kassette am Werkzeug angreift. Dies weist den Vorteil auf, dass die Kassette, welche das Werkzeug ergreift und aufnimmt, zusammen mit dem Werkzeug als Einheit nach dem Öffnen der Schublade entnommen wird und unmittelbar in ein Magazin der Bearbeitungsmaschine eingesetzt werden kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht der Rüstvorrichtung,
- Figur 2: eine schematische Ansicht von vorne auf die Rüstvorrichtung,
- Figur 3: eine schematische Schnittansicht der Rüstvorrichtung entlang der Linie A-A in Figur 2,
- Figur 4: eine perspektivische Ansicht einer Kassette mit einem darin gehaltenen Stanzwerkzeug,
- Figur 5: eine schematische Schnittansicht der Kassette mit einem Stanzwerkzeug entlang der Linie B-B in Figur 4,
- Figur 6: eine schematische Schnittansicht der Kassette mit einem Umformwerkzeug,
- Figur 7: eine perspektivische Ansicht der Rüstvorrichtung in Figur 1 in einem ersten Rüstschritt,
- Figur 8: eine perspektivische Ansicht der Rüstvorrichtung mit dem darin positionierten Werkzeug,
- Figur 9: eine schematische Schnittansicht der Rüstvorrichtung entlang der Linie C-C in Figur 8,
- Figur 10: schematische Schnittansichten während dem Überführen des Werkzeuges in eine Messposition,
- Figur 11: schematische Schnittansichten während dem Überführen des Werkzeuges in eine Messposition,
- Figur 12: schematische Schnittansichten während dem Überführen des Werkzeuges in eine Messposition,
- Figur 13: eine schematische Ansicht einer alternativen Ausführungsform zu Figur 11,
- Figur 14: eine schematische Schnittansicht einer weiteren Prüfposition des Werkzeugs in der Rüstvorrichtung,
- Figur 15: eine perspektivische Ansicht der Rüstvorrichtung in einer Wechsellage,
- Figur 16: eine schematische Schnittansicht der Rüstvorrichtung gemäß Figur 15,
- Figur 17: eine schematische Schnittansicht mit einer in die Rüstvorrichtung eingesetzten Kassette,

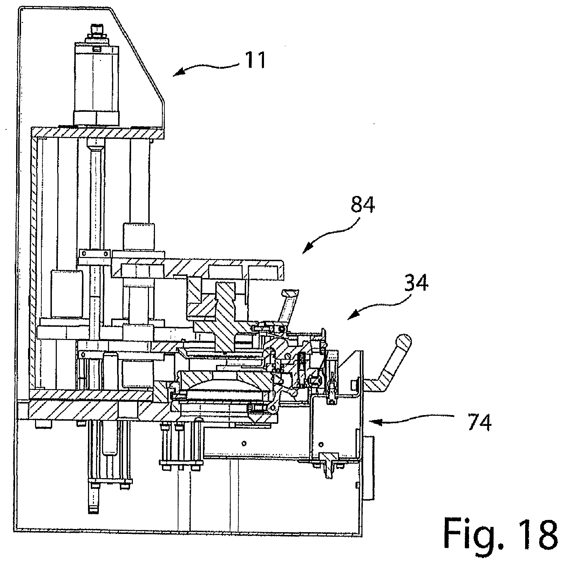

- Figur 18: eine schematische Schnittansicht zur Aufnahme des Werkzeuges durch die Kassette in der Wechsellage der Rüstvorrichtung,
- Figur 19: eine perspektivische Ansicht der Rüstvorrichtung zur Justierung des Stempels,
- Figur 20: eine perspektivische Ansicht der Rüstvorrichtung mit einem am Grundgestell einsetzbaren Mehrfachwerkzeug, und
- Figur 21: eine schematische Seitenansicht eines Kalibriernormals.

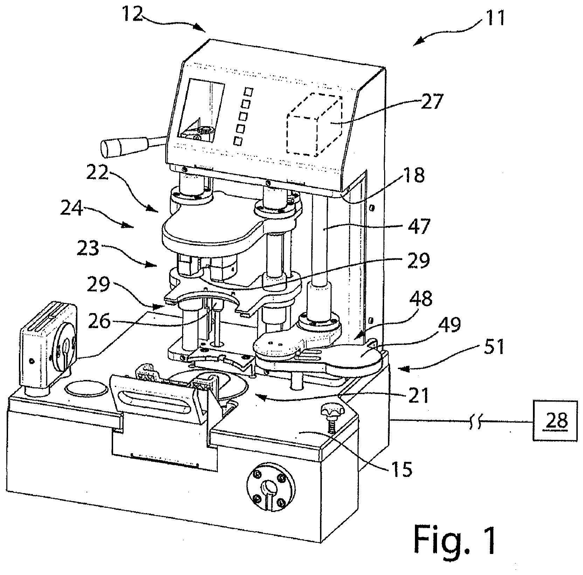

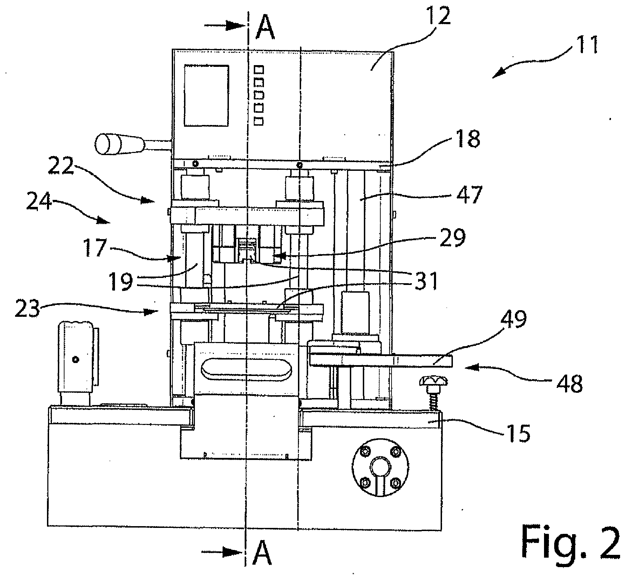

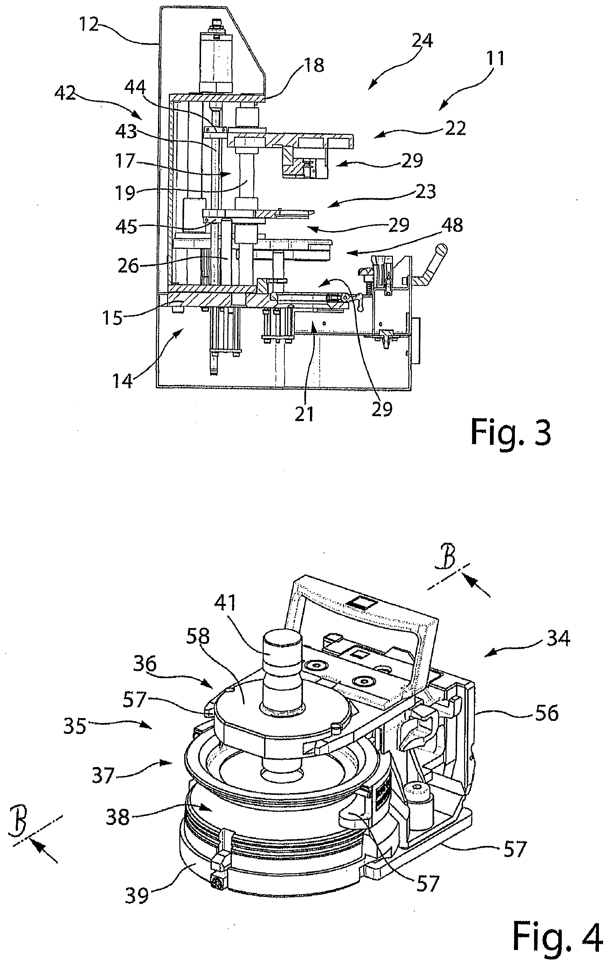

In Figur 1 ist eine perspektivische Ansicht von vorne auf eine Rüstvorrichtung 11 für Werkzeuge 35 (Figur 4) zum Umformen oder Stanzen von plattenförmigen Materialien dargestellt. Die Figur 2 zeigt eine schematische Ansicht von vorne, und Figur 3 zeigt eine schematische Schnittansicht der Rüstvorrichtung 11 entlang der Linie A-A in Figur 2. Die Rüstvorrichtung 11 umfasst ein Gehäuse 12. Im Gehäuse 12 ist ein Grundgestell 14 vorgesehen. Dieses Grundgestell 14 umfasst eine Grundplatte 15, von welcher aus sich eine Führung 17 vertikal nach oben erstreckt. Beabstandet zur Grundplatte 15 ist eine obere Deckplatte 18 des Grundgestells 14 vorgesehen, um die Führung 17 zu fixieren. Die Führung 17 umfasst bevorzugt zwei parallel zueinander beabstandete Führungssäulen 19.

An oder im Grundgestell 14, insbesondere der Grundplatte 15, ist eine Matrizenaufnahme 21 vorgesehen. Diese Matrizenaufnahme 21 ist fest am Grundgestell 14 angeordnet. Oberhalb der Matrizenaufnahme 21 ist eine Stempelaufnahme 22 vorgesehen. Diese Stempelaufnahme 22 ist an der Führung 17 aufgenommen und entlang den Führungssäulen 19 verfahrbar. Zwischen der Stempelaufnahme 22 und der Matrizenaufnahme 21 ist vorzugsweise eine Abstreiferaufnahme 23 vorgesehen. Diese Abstreiferaufnahme 23 ist an der Führung 17 geführt und entlang den Führungssäulen 19 auf und ab bewegbar.

Die Stempelaufnahme 22 und die Abstreiferaufnahme 23 sind in einer Ausgangsposition 24 oder Grundposition vorgesehen. An der Stempelaufnahme 22 greift ein Rückstellelement 26 an, durch welches die Stempelaufnahme 22 in der Ausgangsposition 24 gehalten ist.

Vorzugsweise ist am Abstreiferelement 23 ebenfalls ein Rückstellelement 26 vorgesehen, um dieses in der Ausgangsposition 24 zu positionieren. Die Stempelaufnahme 22 und das Abstreiferelement 23 sind entgegen der Rückstellkraft des Rückstellelementes 26 auf die Matrizenaufnahme 21 zu bewegbar und verfahrbar.

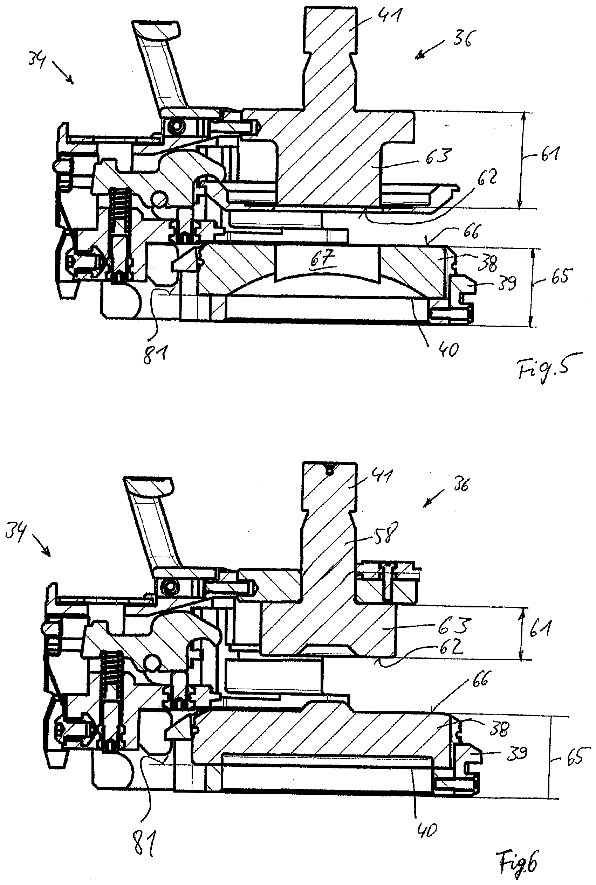

Die Stempelaufnahme 22 umfasst eine Einstecköffnung 29 zur Aufnahme eines Stempels 36 eines Werkzeuges 35, welches in den Figuren 4 und 5 dargestellt ist. Der Einstecköffnung 29 zugeordnet ist vorzugsweise ein lösbares Verbindungselement 31 vorgesehen, sodass nach dem Einsetzen des Stempels 35, insbesondere dessen Einspannzapfen 41, der Stempel 36 gesichert aufgenommen ist.

Die Abstreiferaufnahme 23 umfasst eine Einstecköffnung 29, in welche ein Abstreifer 37 des Werkzeugs 35 gemäß den Figuren 4 und 5 einsetzbar ist. Diese Einstecköffnung 29 der Abstreiferaufnahme 23 weist ebenfalls ein lösbares Verbindungselement 31 auf, um den Abstreifer 37 nach dem Einsetzen in die Abstreiferaufnahme 23 zu sichern.

Die Matrizenaufnahme 21 umfasst ebenfalls eine Einstecköffnung 29, um eine Matrize 38 des Werkzeugs 35 gemäß den Figuren 4 und 5 einzusetzen. Mittels zumindest einem lösbaren Verbindungselement 31 ist die Matrize 38 in der Matrizenaufnahme 21 gesichert gehalten. In die Matrizenaufnahme 21 kann sowohl eine Matrize 38 mit Matrizenteller 39, der in den Figuren 4 und 5 dargestellt ist, eingesetzt werden als auch eine Matrize 38 ohne Matrizenteller. Zwischen dem Matrizenteller 39 und der Matrize 38 können Distanzelemente 40 vorgesehen sein.

Die Stempelaufnahme 22 und die Abstreiferaufnahme 23 greifen bevorzugt an beiden Führungssäulen 19 an und sind entlang diesen verfahrbar. Parallel zu diesen Führungssäulen 19 ist eine Sensorstange 43 einer Messeinrichtung 42 vorgesehen, entlang welcher ein Sensor der Stempelaufnahme 22, ein Sensor 45 der Abstreiferaufnahme 23 verfahrbar geführt ist.

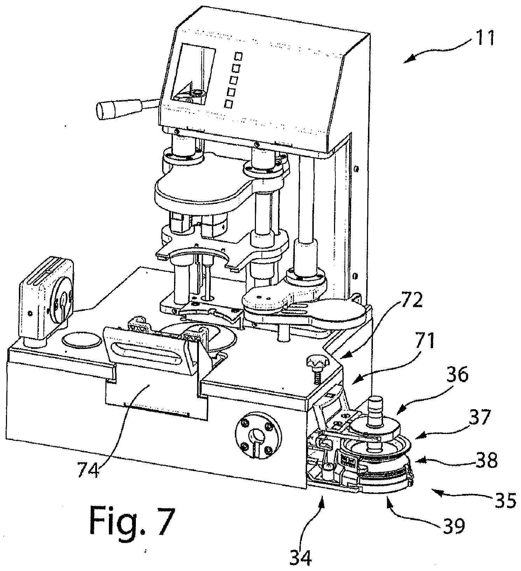

Parallel zur Führung 17 ist eine weitere Säule 47 vorgesehen, an welcher ein Messgegenstand 48 befestigt ist. Dieser Messgegenstand 48 kann entlang der Führungssäule 47 auf und ab bewegbar beziehungsweise in einer vorbestimmten Höhe gehalten werden. Der Messgegenstand weist beispielsweise eine schwenkbare Messplatte 49 auf, die horizontal vorzugsweise parallel zur Grundplatte 15 - verschwenkbar ist. Dieser Messgegenstand 48 kann auch aus einer Nichtgebrauchsposition 51 gemäß Figur 1 in eine Messposition 78 schwenkbar sein, welche nachfolgend in Figur 7 näher erörtert wird.

Die Verfahrbewegung der Stempelaufnahme 22 und/oder der Abstreiferaufnahme 23 auf die Matrizenaufnahme 21 zu kann manuell angesteuert werden. Auch kann ein motorischer Antrieb vorgesehen sein, durch welchen die Zustellbewegung erzeugt wird.

Die Rüstvorrichtung 11 umfasst eine Auswerteeinrichtung 27 für die erfassten Messdaten einer Messvorrichtung 42. Die Auswerteeinrichtung ist kabellos oder kabelgebunden mit einer Bearbeitungsmaschine 28 verbunden, um die erfassten Daten des Werkzeugs 35 an die Bearbeitungsmaschine, eine Cloud oder eine Datenbank zu übertragen. Dieser Datensatz kann zu einem späteren Zeitpunkt von der Cloud oder der Datenbank abgerufen beziehungsweise heruntergeladen werden.

In Figur 4 ist perspektivisch eine Kassette 34 dargestellt, welche ein Werkzeug 35 aufnimmt. Figur 5 zeigt eine schematische Schnittansicht der Kassette 34 mit dem Werkzeug 35 gemäß Figur 4. Eine solche Kassette 34 ist mittels einer Kassettenführung 56 beispielsweise in einem Magazin einer Bearbeitungsmaschine 28 auswechselbar positioniert. Diese Bearbeitungsmaschine 28 kann eine Stanz- und/oder Biegebearbeitungsmaschine oder eine Laserschneid-Stanz- und/oder Biegebearbeitungsmaschine sein. Diese Kassette 34 nimmt über Greifelemente 57 den Stempel 36 auf. Die Greifelemente 57 greifen bevorzugt an einem Grundkörper 58 des Stempels 36 oder an einem Justierring des Stempels 36 an. Der Abstreifer 37 ist mit Abstand zum Stempel 36 in der Kassette 34 aufgenommen. Dieser wird ebenfalls durch Greifelemente 57 gehalten. Beabstandet zum Abstreifer 37 ist die Matrize 38 durch Greifelemente 57 in der Kassette 34 gehalten. Im Ausführungsbeispiel ist die Matrize 38 in einem Matrizenteller 39 vorgesehen. Zwischen dem Matrizenteller 39 und der Matrize 38 sind Distanzscheiben 40 vorgesehen.

Die Rüstvorrichtung 11 dient zur Erfassung von geometrischen Daten des Werkzeuges 35. Eine Messgröße ist eine Stempellänge 61 (Figur 5), welche beispielsweise durch eine obere Kante des Grundkörpers 58 des Stempels 36 bis zur Stirnseite 62 des Stempels 36 beziehungsweise des Bearbeitungswerkzeuges 63 definiert ist.

Eine weitere Messgröße ist die Matrizenhöhe 65 (Figur 5). Die Matrizenhöhe 65 bestimmt sich ausgehend von einer Unterseite der Matrize 38 oder des Matrizentellers 39 bis zur Auflagefläche 66 der Matrize 38, welche eine Öffnung 67 umgibt. Da die Auflagefläche 66 der Matrizen 38 einem Verschleiß unterliegt, kann zur Einstellung einer definierten Matrizenhöhe 65 zwischen der Matrize 38 und dem Matrizenteller 39 eine Distanzscheibe 40 vorgesehen sein.

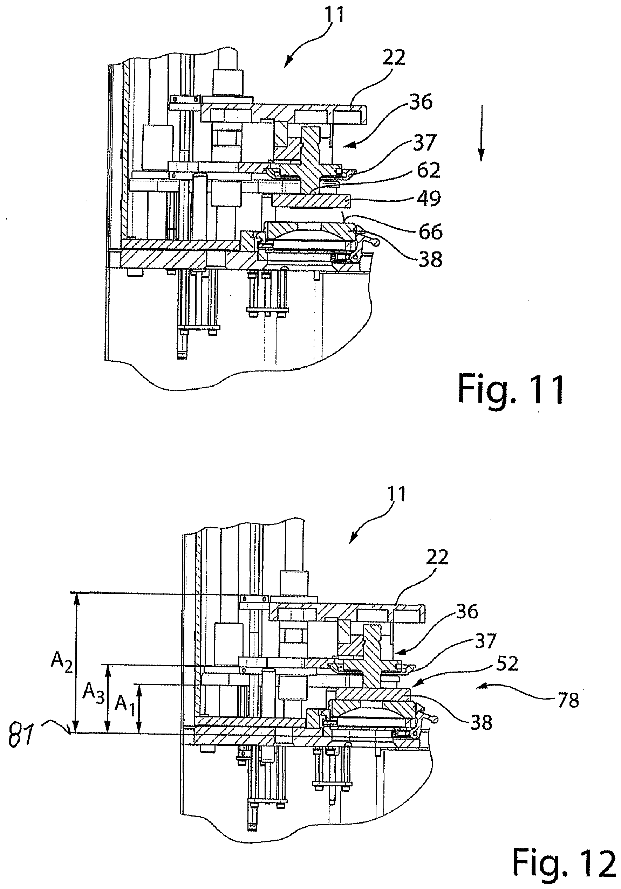

Eine weitere Messgröße ist die Eintauchtiefe. Die Eintauchtiefe ist der Abstand zwischen einer Unterseite des Abstreifers 37 und der dieser gegenüber hervorstehenden Stirnseite 62 des Bearbeitungswerkzeuges 63 des Stempels 36 und wird zu Figur 11 beschrieben.

In Figur 6 ist eine schematische Schnittansicht der Kassette 34 mit dem Werkzeug 35 als Umformwerkzeug dargestellt. Durch ein solches Umformwerkzeug kann beispielsweise eine napfförmige Vertiefung in ein plattenförmiges Material eingebracht werden. Dieses Umformwerkzeug ist nur beispielhaft. Bei diesem Umformwerkzeug ist eine Messgröße die Stempellänge 61, welche beispielsweise durch eine obere Kante des Grundkörpers 58 des Stempels 36 bis zur Stirnseite 62 des Stempels 36 definiert ist.

Eine weitere Messgröße ist die Matrizenhöhe 65 gemäß Figur 6. Diese bestimmt sich ausgehend von einer Unterseite der Matrize 38 oder des Matrizentellers 39 bis zur Auflagefläche 66 der Matrize.

Die Erfassung dieser Messgrößen für das Werkzeug 35 wird nachfolgend beschrieben:
Am Gehäuse 12 der Rüstvorrichtung 11 ist eine Kassettenaufnahme 71 vorgesehen. Dieser Kassettenaufnahme 71 ist ein Entriegelungselement 72 zugeordnet. Die mit dem Werkzeug 35 bestückte Kassette 34 wird in die Kassettenaufnahme 71 eingesetzt. Durch Betätigen des Entriegelungselementes 72 kann die Haltekraft der Greifelemente 57 der Kassette 34 gelöst werden. Daraufhin werden der Stempel 36 und der Abstreifer 37 aus der Kassette 34 entnommen. Der Stempel 36 wird in die Stempelaufnahme 22, und der Abstreifer 37 wird in die Abstreiferaufnahme 61 eingesetzt. Zum Einsetzen der Matrize 38 in die Matrizenaufnahme 21 kann bevorzugt eine Schublade 74 am Gehäuse geöffnet werden (Figur 7). Darauffolgend kann die Matrize 38 bevorzugt mit Kassette 34 erleichtert eingesetzt werden. Der Stempel 36, der Abstreifer 37 und die Matrize 38 können auch manuell aus der Kassette entnommen werden.

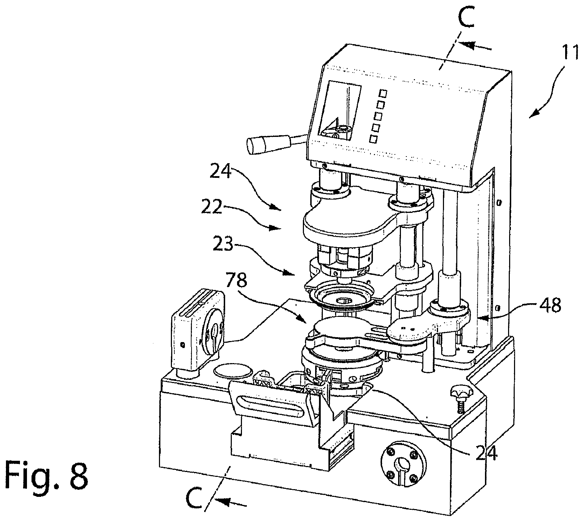

Die Figur 8 zeigt die Rüstvorrichtung 11 in einer Ausgangsposition 24 für die Erfassung der Messgrößen. Der Stempel 36, der Abstreifer 37 und die Matrize 38 sind in den jeweiligen Aufnahmen 21, 22, 23 eingesetzt. Der Messgegenstand 48, insbesondere die Messplatte 49, ist in die Messposition 52 eingeschwenkt. Diese Ausgangsposition 24 zur Erfassung der Messgrößen ist in einer Schnittansicht gemäß Figur 8 dargestellt. Aus dieser Schnittansicht geht hervor, dass der in der Stempelaufnahme 22 eingesetzte Stempel 36 mit Abstand zum Abstreifer 37 in der Abstreiferaufnahme 23 angeordnet ist. Wiederum ist ein Abstand zwischen dem Abstreifer 37 und dem Messgegenstand 48 vorgesehen. Der Messgegenstand 48 ist erhöht beziehungsweise beabstandet zur Matrize 38 in der Matrizenaufnahme 21 angeordnet.

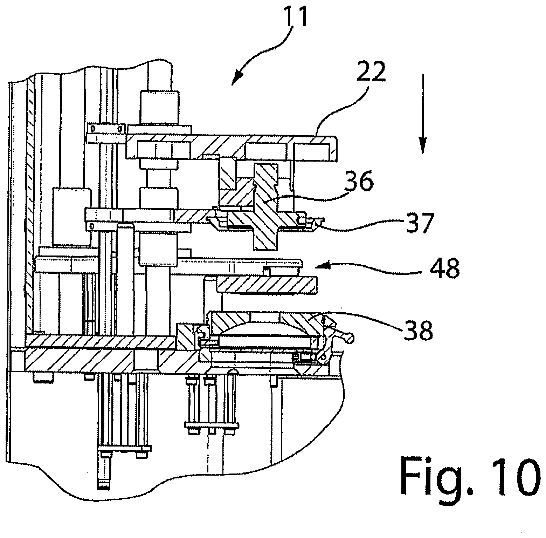

Ausgehend von dieser Ausgangsposition 24 der Rüstvorrichtung 11 sind nachfolgend in den Figuren 10 bis 12 einzelne Schritte dargestellt, die zur Einnahme einer Messposition 52 für die Ermittlung der Stempellänge 61, der Matrizenhöhe 65 und der Eintauchtiefe 69 führen.

Die Stempelaufnahme 22 wird abgesenkt, bis der Grundkörper 58 des Stempels 36 am Abstreifer 37 aufliegt.

Darauffolgend wird die Stempelaufnahme 22 gemeinsam mit dem Abstreiferelement 23 weiter nach unten verfahren, bis die Stirnseite 62 des Stempels 36 auf der Messplatte 49 aufliegt. Dies ist in Figur 11 dargestellt.

Anschließend erfolgt eine weitere Verfahrbewegung, in welcher die Stempelaufnahme 22, die Abstreiferaufnahme 23 und der Messgegenstand 48 gemeinsam mit einem jeweiligen definierten Abstand zueinander verfahren werden, bis der Messgegenstand 48 auf der Auflagefläche 66 der Matrize 38 aufliegt. Dies ist in Figur 12 dargestellt. Diese Position ist die Messposition 52.

Die Matrize 38 liegt in der Matrizenaufnahme 21 auf. Diese Anlagefläche bildet einen Nullpunkt 81 für die Messeinrichtung 42. Der Messgegenstand 48 liegt auf der Matrize 38 auf. Mittels einem an dem Messgegenstand 48 vorgesehenen Sensor 46 wird durch die Sensorstange 43 der Abstand A1 erfasst. Die Messplatte 48 beziehungsweise der Abstand der Unterseite des Messgegenstandes 48 zum Sensor 46 ist bekannt und definiert. Somit kann aus diesem gemessenen Abstand A1 die Matrizenhöhe 65 erfasst werden.

Des Weiteren wird der Abstand A2 zwischen dem Nullpunkt 81 und dem Sensor 44 der Stempelaufnahme 22 erfasst. Da ein Abstand des Sensors 44 zur Unterseite der Stempelaufnahme 22 beziehungsweise der Einstecköffnung 29 definiert ist, kann durch die Differenz der Abstände A2 und A1 die Stempellänge 61 des Stempels 36 erfasst werden.

Ergänzend wird durch den Sensor 45 der Abstreiferaufnahme 23 der Abstand zum Nullpunkt 81 erfasst. Die Differenz zwischen dem Abstand A3 und A1 ergibt die Eintauchtiefe des Bearbeitungswerkzeuges 63 des Stempels 36.

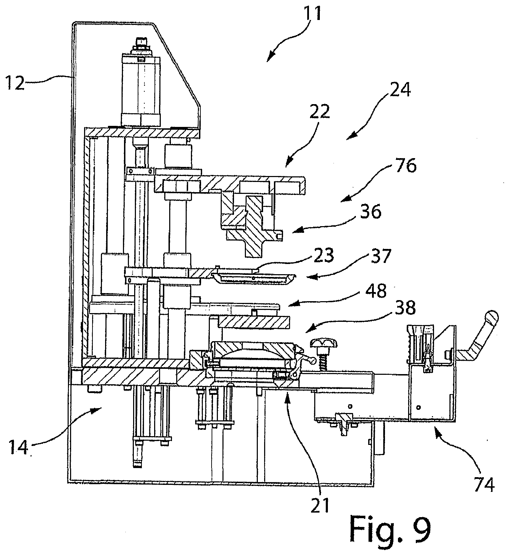

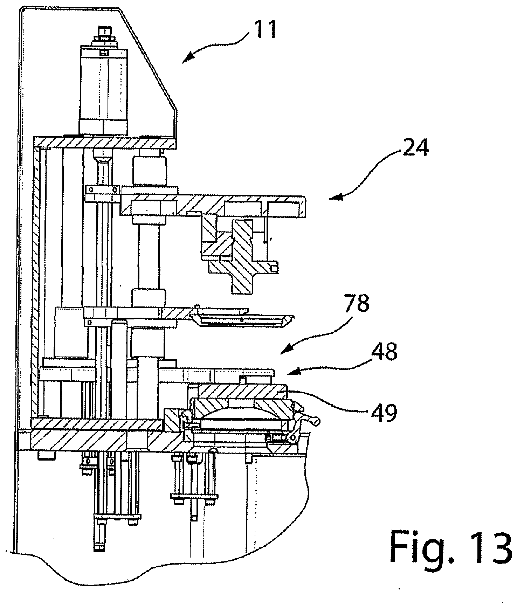

In Figur 13 ist eine Alternative bezüglich einer Ausgangsposition des Messgegenstandes 48 zu Figur 9 dargestellt. Bei dieser alternativen Ausführungsform liegt die Messplatte 49 bereits auf der Auflagefläche 66 der Matrize 38 auf. Die Verfahrbewegung der Stempelaufnahme 22 und der Abstreiferaufnahme 23 erfolgt jedoch gleich wie zu den Figuren 9 bis 11 beschrieben ist.

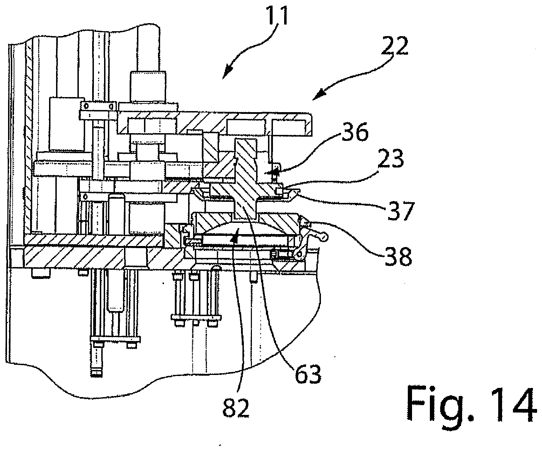

In Figur 14 ist eine weitere Anordnung der Stempelaufnahme 22 und Abstreiferaufnahme 23 zur Matrize 38 dargestellt. Ausgehend von der Messposition 52 gemäß Figur 12 kann der Messgegenstand 48 in die Nichtgebrauchsposition 51 geschwenkt werden. Darauffolgend werden die Stempelaufnahme 22 und die Abstreiferaufnahme 23 weiter auf die Matrize 38 zubewegt. Das Bearbeitungswerkzeug 63 des Stempels 36 taucht in die Öffnung 67 der Matrize 38 ein. Diese Eintauchposition 82 kann weiterhin über die Sensoren 44 und 45 erfasst werden. Dadurch erfolgt eine Eintauchprüfung, das heißt, dass die Zuordnung des Stempels 36 zur Matrize 38 ordnungsgemäß und eine Kollision bei der Benutzung der Bearbeitungsmaschine verhindert ist, sofern das Bearbeitungswerkzeug 63 in die Öffnung 67 der Matrize 38 eintaucht.

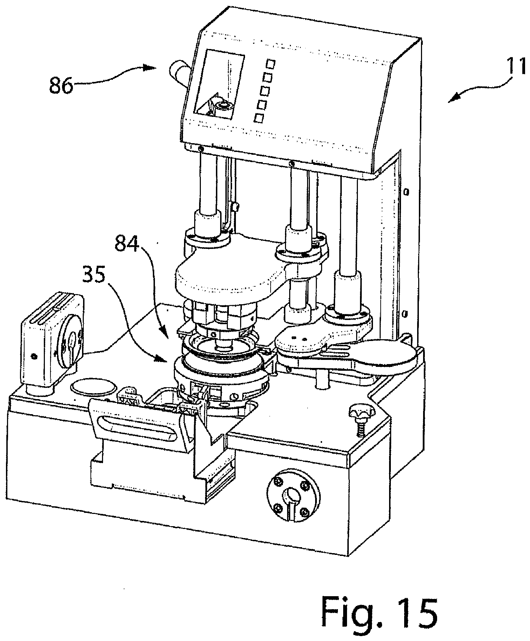

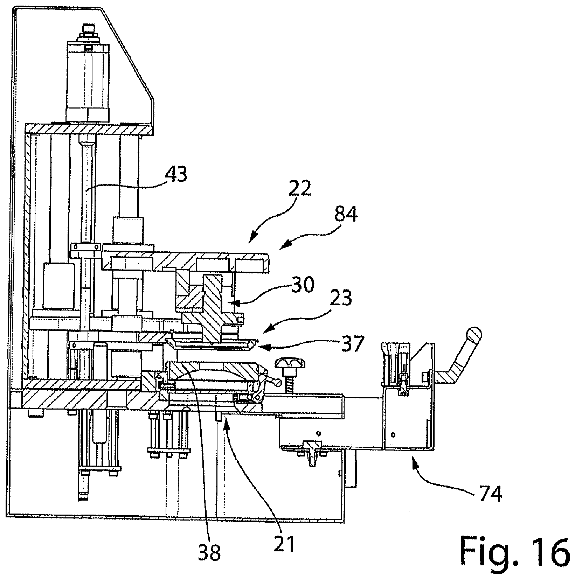

In Figur 15 ist die Rüstvorrichtung 11 in einer Wechsellage 84 dargestellt. Ausgehend von der Position gemäß Figur 14 können die Stempelaufnahme 22 und die Abstreiferaufnahme 23 entweder in eine Ausgangsposition 24 gemäß Figur 1 verfahren werden und darauffolgend durch eine Abwärtsbewegung in die Wechsellage 84. Alternativ kann ausgehend von der Eintauchposition 82 gemäß Figur 14 eine Aufwärtsbewegung der Stempelaufnahme 22 und der Abstreiferaufnahme 23 durch die Rückstellelemente 26 bis zu einer bereits eingestellten Arretierung erfolgen, durch welche die Wechsellage 84 eingenommen ist. Bevorzugt umfasst die Arretierung eine Hebelanordnung 86, welche durch eine Schwenkbewegung eine hintere Position gemäß Figur 14 einnimmt, um die Aufwärtsbewegung der Stempelaufnahme 22 und der Abstreiferaufnahme 23 zu begrenzen. Diese Wechsellage 84 ist in einer Schnittansicht in Figur 16 näher dargestellt. Der Abstand der Stempelaufnahme 22, der Abstreiferaufnahme 23 und der Matrizenaufnahme 21 entspricht dem Abstand der Greifelemente 57 in der Kassette zu deren Aufnahme.

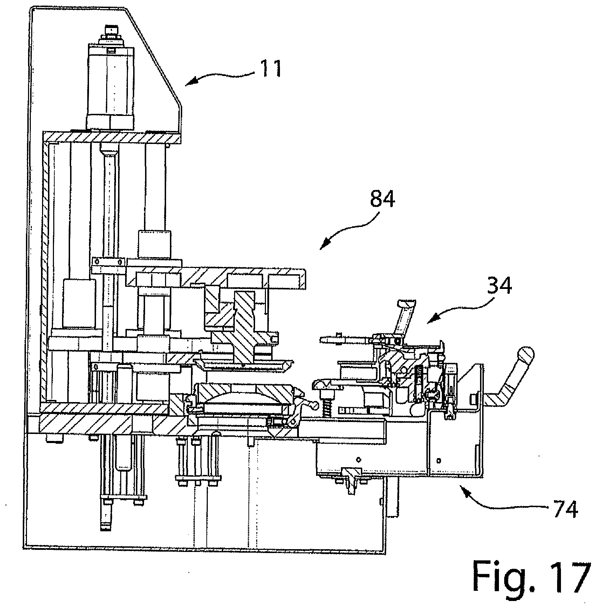

Zur Entnahme des Werkzeuges 35 aus der Rüstvorrichtung 11 wird zunächst die Schublade 74 geöffnet. Darauffolgend wird die leere Kassette 34 in die Schublade 74 eingesetzt. Dies ist in Figur 17 dargestellt. Zur Entnahme des Werkzeuges 35 wird die Schublade 74 geschlossen. Die Greifelemente 57 greifen am Stempel 36, am Abstreifer 37 und der Matrize 38 oder dem Matrizenteller 39 an. Die Greifkraft der Greifelemente 57 ist höher als die Haltekraft der lösbaren Verbindungselemente 31 in den Aufnahmen 21, 22, 23. Darauffolgend wird die Schublade 74 wieder geöffnet und die Kassette 34 mit dem ergriffenen Werkzeug 35 entnommen. Die Kassette 34 ist betriebsbereit und kann in das Magazin der Bearbeitungsmaschine übergeführt werden.

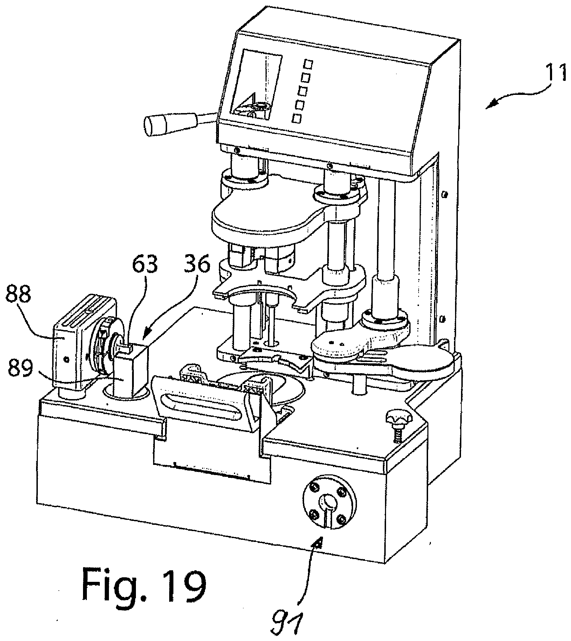

In Figur 19 ist eine perspektivische Ansicht der Rüstvorrichtung 11 gemäß Figur 1 dargestellt, in welcher die Justierung eines Bearbeitungswerkzeuges 63 zu einem Justierring des Stempels 36 erfolgt. Am Gehäuse 12, insbesondere auf der Grundplatte 15, ist eine Haltevorrichtung 88 vorgesehen, in welcher ein Einspannzapfen 41 des Stempels 36 fixiert werden kann. Das Bearbeitungswerkzeug 63 wird mittels einer Ausrichthilfe 89 ausgerichtet und kann darauffolgend mit dem Justierring feststehend am Stempel 36 gehalten werden. Anschließend kann der ausgerichtete Stempel 36 in die Stempelaufnahme 22 eingesetzt werden.

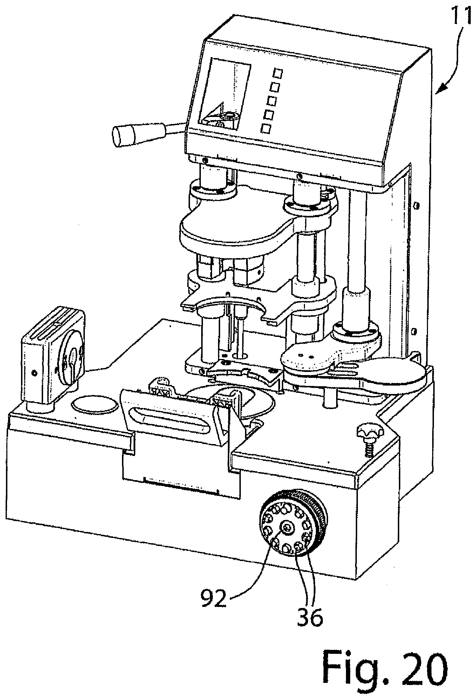

An einer Stirnseite des Gehäuses 12 der Rüstvorrichtung ist eine weitere Haltevorrichtung 91 (Figur 19) für ein Sonderwerkzeug mit einer zentralen Befestigungsschraube, insbesondere einem Mehrfachstempel 93, vorgesehen. Die Figur 20 zeigt die Rüstvorrichtung 11 mit dem in der Haltevorrichtung 91 eingesetzten Mehrfachstempel 39. In diesem Fall handelt es sich um ein sogenanntes Multitool. Diese Haltevorrichtung 91 ermöglicht ein einfaches Zerlegen dieses Mehrfachstempels 36. Dies erfolgt beispielsweise durch Lösen eines stirnseitig angeordneten Befestigungselementes 92, um darauffolgend die einzelnen Stempel 36 zu entnehmen.

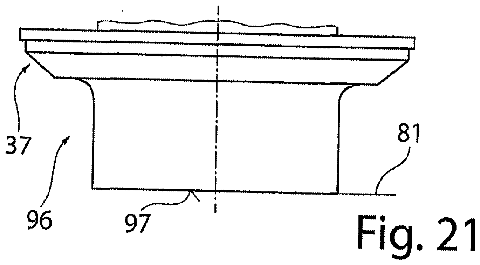

In Figur 21 ist eine schematische Seitenansicht eines Kalibriernormals 96 für die Rüstvorrichtung 11 dargestellt. Durch dieses Kalibriernormal 96 kann die Messvorrichtung 42 vor einer ersten Messung eines Werkzeuges 35 kalibriert werden. Das Kalibriernormal 96 wird in die Matrizenaufnahme 21 eingesetzt. Eine untere Auflagefläche 97 des Kalibriernormals 96 liegt auf der Auflagefläche 66 der Matrizenaufnahme 21 - also im Nullpunkt 81 - auf. Beabstandet zur Auflagefläche 66 ist ein Abstreifer 37 vorzugsweise einteilig ausgebildet. An einer Oberseite des Kalibriernormals 96 ist eine weitere Auflagefläche 97 ausgebildet, welche eine Oberseite des Grundkörpers des Stempels 36 simuliert. Die einzelnen Flächen des Kalibriernormals 96 sind in einem exakten Abstand zueinander ausgerichtet, sodass darauffolgend die einzelnen Sensoren 44, 45 und 46 der Messvorrichtung 42 kalibriert werden können.

## Patentansprüche

1. Rüstvorrichtung für ein Werkzeug (35) zum Stanzen oder Umformen von plattenförmigen Materialien, welches zumindest einen Stempel (36) und eine Matrize (38) umfasst,
- mit einer Stempelaufnahme (22), in welcher der Stempel (36) einsetzbar ist,
- mit einer Matrizenaufnahme (21), in welche die Matrize (38) oder ein die Matrize (38) aufnehmender Matrizenteller (39) einsetzbar ist,
- mit zumindest einer Führung (17), durch welche die Stempelaufnahme (22) und die Matrizenaufnahme (21) aufeinander zubewegbar sind,
**dadurch gekennzeichnet,**
- **dass** die Stempelaufnahme (22) entlang der Führung (17) in eine Messposition (52) überführbar ist, in welcher der Stempel (36) auf einer Oberfläche eines Messgegenstandes (48) aufliegt und der Messgegenstand (48) mit seiner Unterseite auf der Matrize (38) aufliegt,
- **dass** eine Messvorrichtung (42) einen Abstand der Stempelaufnahme (22) zu einem Nullpunkt (81) der Matrizenaufnahme (21) und ein Abstand des Messgegenstandes (48) zum Nullpunkt (81) der Matrizenaufnahme (21) erfasst, und
- **dass** eine Auswerteeinrichtung (27) die von der Messvorrichtung (42) erfassten Abstände auswertet und zumindest eine Stempellänge (61) des Stempels (36) und eine Matrizenhöhe (65) der Matrize (38) oder eine Matrizenhöhe (65) der im Matrizenteller (39) angeordneten Matrize (38) ausgibt.

2. Rüstvorrichtung nach Anspruch 1, **dadurch gekennzeichnet, dass** der Messgegenstand (48) als eine Messplatte (49), vorzugsweise mit einer definierten Dicke der Messplatte, ausgebildet ist.

3. Rüstvorrichtung nach Anspruch 1 oder 2, **dadurch gekennzeichnet, dass** der Messgegenstand (48) aus einer Nichtgebrauchsposition (51) in die Messposition (52) zwischen der Stempelaufnahme (22) und der Matrizenaufnahme (21) überführbar ist.

4. Rüstvorrichtung nach einem der vorhergehenden Ansprüche, **dadurch gekennzeichnet, dass** nach der Erfassung der Stempellänge (61) und der Matrizenhöhe (65) der Messgegenstand (48) in eine Nichtgebrauchsposition (51) überführbar ist und die Stempelaufnahme (22) entlang der Führung (17) in Richtung auf die Matrize (38) verfahrbar ist und die Messeinrichtung (42) ein Eintauchen des Stempels (38) in eine Öffnung (67) der Matrize (38) erfasst.

5. Rüstvorrichtung nach einem der vorhergehenden Ansprüche, **dadurch gekennzeichnet, dass** der Messgegenstand (48) entlang der Führung (17) oder einer separaten Säule (47) verfahrbar ist.

6. Rüstvorrichtung nach einem der vorhergehenden Ansprüche, **dadurch gekennzeichnet, dass** zwischen der Stempelaufnahme (22) und der Matrizenaufnahme (21) eine Abstreiferaufnahme (23) vorgesehen ist, welche vorzugsweise entlang der Führung (17) verfahrbar ist.

7. Rüstvorrichtung nach einem der vorhergehenden Ansprüche, **dadurch gekennzeichnet, dass** ein in der Messeinrichtung (42) aus den erfassten Messwerten erzeugter werkzeugspezifischer Datensatz einer Cloud, einer Datenbank oder einer Bearbeitungsmaschine (28) zuführbar ist.

8. Rüstvorrichtung nach einem der vorhergehenden Ansprüche, **dadurch gekennzeichnet, dass** die Stempelaufnahme (22) entgegen eines Rückstellelementes (26) in die Messposition (52) verfahrbar und vorzugsweise selbständig durch das Rückstellelement (26) in die Ausgangsposition (76) zurückführbar ist.

9. Rüstvorrichtung nach einem der vorhergehenden Ansprüche, **dadurch gekennzeichnet, dass** die Abstreiferaufnahme (23) entgegen einem Rückstellelement (26) in die Messposition (52) verfahrbar und vorzugsweise durch das Rückstellelement (26) in eine Ausgangsposition (78) zurückführbar ist.

10. Rüstvorrichtung nach einem der vorhergehenden Ansprüche, **dadurch gekennzeichnet, dass** ein Grundgestell (14) vorgesehen ist, welches die Matrizenaufnahme (21) und zumindest die Führung (17) für die Stempelaufnahme (22) aufnimmt.

11. Rüstvorrichtung nach einem der vorhergehenden Ansprüche, **dadurch gekennzeichnet, dass** die Stempelaufnahme (21) und vorzugsweise die Abstreiferaufnahme (22) in eine Wechsellage (84) verfahrbar und vorzugsweise in dieser Wechsellage (84) mit einer Hebelanordnung (86) oder einer mit einem Antrieb ansteuerbaren Verriegelung arretierbar sind.

12. Rüstvorrichtung nach einem der Ansprüche 10 oder 11, **dadurch gekennzeichnet, dass** am Grundgestell (14) eine Schublade (84) zur Aufnahme einer Kassette (34) vorgesehen ist, welche den Stempel (36), vorzugsweise den Abstreifer (37), und die Matrize (38) oder den Matrizenteller (39) mit der darin aufgenommenen Matrize (38) aufnimmt, durch welche eine gleichzeitige Entnahme des Stempels (36), vorzugsweise des Abstreifers (37), und der Matrize (38) vorgesehen ist.

13. Rüstvorrichtung nach einem der vorhergehenden Ansprüche, **dadurch gekennzeichnet, dass** ein Kalibriernormal (96) vorgesehen ist, durch welches ein definierter Abstand vom Nullpunkt (81) der Matrizenaufnahme (21) zur Stempelaufnahme (22) und vorzugsweise Abstreiferaufnahme (23) einstellbar ist.

14. Rüstvorrichtung nach einem der vorhergehenden Ansprüche, **dadurch gekennzeichnet, dass** am Grundgestell (14) eine Kassettenaufnahme (71) mit einem Entriegelungselement (72) zum Entriegeln der darin eingesetzten Kassette (34) vorgesehen ist.

15. Verfahren zum Rüsten von einem Werkzeug (35) zum Stanzen oder Umformen von einem plattenförmigen Material, welches zumindest einen Stempel (36) und eine Matrize (38) umfasst,
- mit einer Rüstvorrichtung (11), welche zumindest eine Stempelaufnahme (22) und eine Matrizenaufnahme (21) sowie zumindest eine Führung (17) aufweist, durch welche die Stempelaufnahme (22) auf die Matrizenaufnahme (21) zubewegbar ist,
- bei dem der Stempel (36) in die Stempelaufnahme (22) eingesetzt wird,
- bei dem die Matrize (38) in die Matrizenaufnahme (21) eingesetzt wird, **dadurch gekennzeichnet,**
- **dass** die Stempelaufnahme (22) entlang der Führung (17) in eine Messposition (52) übergeführt wird, in welche der Stempel (36) auf einer Oberfläche eines Messgegenstandes (48) aufliegt und eine Unterseite des Messgegenstandes (48) auf der Matrize (38) aufliegt,
- **dass** eine Messvorrichtung (42) einen Abstand der Stempelaufnahme (22) zu einem Nullpunkt (81) der Matrizenaufnahme (21) und ein Abstand des Messgegenstandes (48) zum Nullpunkt (81) der Matrizenaufnahme (21) erfasst, und
- **dass** durch eine Auswerteeinrichtung (27) die von der Messvorrichtung (42) erfassten Abstände ausgewertet werden und zumindest eine Stempellänge (61) des Stempels (36) und eine Matrizenhöhe (65) der Matrize (38) oder eine Matrizenhöhe (65) der in einem Matrizenteller (69) angeordneten Matrize (38) ausgegeben wird.

16. Verfahren nach Anspruch 15, **dadurch gekennzeichnet, dass** nach der Erfassung der Stempellänge (61) und der Matrizenhöhe (65) der Messgegenstand (48) in die Nichtgebrauchsposition (51) verfahren und die Stempelaufnahme (22) entlang der Führung (17) auf die Matrize (38) zubewegt wird, sodass die Messeinrichtung (42) ein Eintauchen des Stempels (36) in einer Öffnung (67) der Matrize (38) erfasst.

17. Verfahren nach einem der Ansprüche 15 oder 16, **dadurch gekennzeichnet, dass** aus die durch die Messeinrichtung (42) erfassten Messwerte des Werkzeuges (35) in der Rüstvorrichtung (11) ein werkzeugspezifischer Datensatz gebildet wird, der an eine Datenbank oder eine Cloud oder an die Bearbeitungsmaschine (28) weitergeleitet wird.

## Claims

1. A set-up device for a tool (35) for stamping or shaping planar materials, the device comprising at least one punch (36) and one die (38),
- with a punch holder (22) in which the punch (36) can be inserted,
- with a die holder (21) in which the die (38) or a die plate (39) holding the die (38) can be inserted,
- with at least one guide (17) for moving the punch holder (22) and the die holder (21) toward one another,
**characterized in that**,
- the punch holder (22) can be transferred along the guide (17) to a measurement position (52) in which the punch (36) sits on a surface of an object to be measured (48) and the bottom side of the object to be measured (48) sits on the die (38),
- a measuring device (42) detects a distance of the punch holder (22) to a zero point (81) of the die holder (21) and a distance of the object to be measured (48) to the zero point (81) of the die holder (21), and
- an evaluation device (27) evaluates the distances detected by the measuring device (42) and outputs at least one punch length (61) of the punch (36) and a die height (65) of the die (38) or a die height (65) of the die (38) arranged in the die plate (39).

2. The set-up device according to claim 1, **characterized in that** the object to be measured (48) is designed as a measurement plate (49), preferably with a defined thickness of the measurement plate.

3. The set-up device according to claim 1 or 2, **characterized in that** the object to be measured (48) can be transferred from a non-use position (51) to the measurement position (52) between the punch holder (22) and the die holder (21).

4. The set-up device according to one of the preceding claims, **characterized in that**, after detection of the punch length (61) and the die height (65), the object to be measured (48) can be transferred to a non-use position (51) and the punch holder (22) can be moved along the guide (17) in the direction of the die (38) and the measuring device (42) detects a plunging of the punch (38) into an opening (67) in the die (38).

5. The set-up device according to one of the preceding claims, **characterized in that** the object to be measured (48) can be moved along the guide (17) or a separate column (47).

6. The set-up device according to one of the preceding claims, **characterized in that** a scraper holder (23) is provided between the punch holder (22) and the die holder (21), which can preferably be moved along the guide (17).

7. The set-up device according to one of the preceding claims, **characterized in that** a tool-specific data set generated in the measuring device (42) from the measured values recorded can be fed to a cloud, a database or a processing machine (28).

8. The set-up device according to one of the preceding claims, **characterized in that** the punch holder (22) can be moved to the measurement position (52) counter to a reset element (26) and can preferably be returned to the starting position (76) independently by the reset element (26).

9. The set-up device according to one of the preceding claims, **characterized in that** the scraper holder (23) can be moved to the measurement position (52) counter to a reset element (26) and can preferably be returned to a starting position (78) by the reset element (26).

10. The set-up device according to one of the preceding claims, **characterized in that** a base frame (14) is provided which holds the die holder (21) and at least the guide (17) for the punch holder (22).

11. The set-up device according to one of the preceding claims, **characterized in that** the punch holder (21) and preferably the scraper holder (22) can be moved to a changing position (84) and preferably locked in this changing position (84) using a lever arrangement (86) or a lock which can be controlled by a drive.

12. The set-up device according to one of claims 10 or 11, **characterized in that** a drawer (84) for holding a cassette (34) is provided on the base frame (14), the drawer holding the punch (36), preferably the scraper (37) and the die (38) or the die plate (39) and the die (38) held therein, by means of which a simultaneous removal of the punch (36), preferably the scraper (37), and the die (38) is provided.

13. The set-up device according to one of the preceding claims, **characterized in that** a calibration standard (96) is provided for adjusting a defined distance from the zero point (81) of the die holder (21) to the punch holder (22) and preferably the scraper holder (23).

14. The set-up device according to one of the preceding claims, **characterized in that** a cassette holder (71) with an unlocking element (72) for unlocking the cassette (34) placed therein is provided on the base frame (14).

15. A method for setting up a tool (35) for stamping or shaping a planar material, the tool having at least one punch (36) and one die (38),
- with a set-up device (11) having at least one punch holder (22) and a die holder (21), and at least one guide (17) for moving the punch holder (22) toward the die holder (21),
- in which the punch (36) is inserted into the punch holder (22),
- in which the die (38) is inserted into the die holder (21),
**characterized in that**,
- the punch holder (22) is transferred along the guide (17) to a measurement position (52) in which the punch (36) sits on a surface of an object to be measured (48) and a bottom side of the object to be measured (48) sits on the die (38),
- a measuring device (42) detects a distance of the punch holder (22) to a zero point (81) of the die holder (21) and a distance of the object to be measured (48) to the zero point (81) of the die holder (21), and
- an evaluation device (27) evaluates the distances detected by the measuring device (42) and outputs at least one punch length (61) of the punch (36) and a die height (65) of the die (38) or a die height (65) of the die (38) arranged in a die plate (69).

16. The method according to claim 15, **characterized in that** after the detection of the punch length (61) and the die height (65), the object to be measured (48) is moved to the non-use position (51) and the punch holder (22) is moved toward the die (38) along the guide (17) such that the measuring device (42) detects a plunging of the punch (36) into an opening (67) in the die (38).

17. The method according to one of claims 15 or 16, **characterized in that** a tool-specific dataset is formed in the set-up device (11) from the measured values of the tool (35) detected by the measuring device (42), the dataset being forwarded to a database or a cloud or to the processing machine (28).

## Revendications

1. Dispositif de préparation pour un outil (35) destiné au poinçonnage ou au formage de matériaux en forme de plaques, lequel comprend au moins un poinçon (36) et une matrice (38),
- avec un logement de poinçon (22), dans lequel le poinçon (36) peut être inséré,
- avec un logement de matrice (21), dans lequel la matrice (38) ou un adaptateur de matrice (39) recevant la matrice (38) peut être inséré(e),
- avec au moins un guidage (17), par lequel le logement de poinçon (22) et le logement de matrice (21) peuvent être déplacés l'un vers l'autre,
**caractérisé en ce que**
- le logement de poinçon (22) peut être transféré le long du guidage (17) vers une position de mesure (52) dans laquelle le poinçon (36) repose sur une surface d'un objet à mesurer (48) et l'objet à mesurer (48) repose avec sa face inférieure sur la matrice (38),
- un dispositif de mesure (42) enregistre une distance entre le logement de poinçon (22) et un point zéro (81) du logement de matrice (21) et une distance entre l'objet à mesurer (48) et le point zéro (81) du logement de matrice (21), et
- un dispositif d'évaluation (27) évalue les distances enregistrées par le dispositif de mesure (42) et fournit au moins une longueur de poinçon (61) pour le poinçon (36) et une hauteur de matrice (65) pour la matrice (38) ou une hauteur de matrice (65) pour la matrice (38) placée dans l'adaptateur de matrice (39).

2. Dispositif de préparation selon la revendication 1, **caractérisé en ce que** l'objet à mesurer (48) est conçu comme une plaque de mesure (49), de préférence avec une épaisseur définie de la plaque de mesure.

3. Dispositif de préparation selon la revendication 1 ou 2, **caractérisé en ce que** l'objet à mesurer (48) peut être transféré d'une position de non-utilisation (51) à la position de mesure (52) entre le logement de poinçon (22) et le logement de matrice (21).

4. Dispositif de préparation selon l'une des revendications précédentes, **caractérisé en ce qu'**après la détection de la longueur de poinçon (61) et de la hauteur de matrice (65), l'objet à mesurer (48) peut être transféré dans une position de non-utilisation (51) et le logement de poinçon (22) peut être déplacé le long du guidage (17) en direction de la matrice (38) et le dispositif de mesure (42) détecte une plongée du poinçon (38) dans une ouverture (67) de la matrice (38).

5. Dispositif de préparation selon l'une des revendications précédentes, **caractérisé en ce que** l'objet à mesurer (48) peut être déplacé le long du guidage (17) ou d'une colonne séparée (47).

6. Dispositif de préparation selon l'une des revendications précédentes, **caractérisé en ce qu'**entre le logement de poinçon (22) et le logement de matrice (21) est prévu un logement de racleur (23), qui est de préférence déplaçable le long du guidage (17).

7. Dispositif de préparation selon l'une des revendications précédentes, **caractérisé en ce qu'**un jeu de données spécifique à l'outil, généré dans le dispositif de mesure (42) à partir des valeurs de mesure saisies, peut être amené à un nuage, une banque de données ou une machine d'usinage (28).

8. Dispositif de préparation selon l'une des revendications précédentes, **caractérisé en ce que** le logement de poinçon (22) peut être déplacé dans la position de mesure (52) à l'encontre d'un élément de rappel (26) et peut être ramené de préférence automatiquement dans la position initiale (76) par l'élément de rappel (26).

9. Dispositif de préparation selon l'une des revendications précédentes, **caractérisé en ce que** le logement de racleur (23) peut être déplacé dans la position de mesure (52) à l'encontre d'un élément de rappel (26) et peut de préférence être ramené dans une position initiale (78) par l'élément de rappel (26).

10. Dispositif de préparation selon l'une des revendications précédentes, **caractérisé en ce qu'**il est prévu un bâti de base (14), lequel reçoit le logement de matrice (21) et au moins le guidage (17) pour le logement de poinçon (22).

11. Dispositif de préparation selon l'une des revendications précédentes, **caractérisé en ce que** le logement de poinçon (21) et de préférence le logement de raclage (22) peuvent être déplacés vers une position de changement (84) et peuvent être bloqués de préférence dans cette position de changement (84) à l'aide d'un système de leviers (86) ou d'un verrouillage pouvant être commandé par un entraînement.

12. Dispositif de préparation selon l'une des revendications 10 ou 11, **caractérisé en ce qu'**il est prévu sur le bâti de base (14) un tiroir (84) destiné à recevoir une cassette (34) qui reçoit le poinçon (36), de préférence le racleur (37), et la matrice (38) ou l'adaptateur de matrice (39) avec la matrice (38) qui y est logée, grâce auquel il est prévu un retrait simultané du poinçon (36), de préférence du racleur (37), et de la matrice (38).

13. Dispositif de préparation selon l'une des revendications précédentes, **caractérisé en ce qu'**il est prévu un étalon de calibrage (96) permettant de régler une distance définie entre le point zéro (81) du logement de matrice (21) et le logement de poinçon (22) et, de préférence, le logement de racleur (23).

14. Dispositif de préparation selon l'une des revendications précédentes, **caractérisé en ce qu'**il est prévu sur le bâti de base (14) un logement de cassette (71) avec un élément de déblocage (72) destiné à débloquer la cassette (34) qui y est insérée.

15. Procédé de préparation d'un outil (35) pour le poinçonnage ou le formage d'un matériau en forme de plaque, lequel comprend au moins un poinçon (36) et une matrice (38),
- avec un dispositif de préparation (11), lequel présente au moins un logement de poinçon (22) et un logement de matrice (21) ainsi qu'au moins un guidage (17), par lequel le logement de poinçon (22) peut être déplacé vers le logement de matrice (21),
- selon lequel le poinçon (36) est inséré dans le logement de poinçon (22),
- selon lequel la matrice (38) est insérée dans le logement de matrice (21),
**caractérisé en ce que**
- le logement de poinçon (22) est transféré le long du guidage (17) dans une position de mesure (52) dans laquelle le poinçon (36) repose sur une surface d'un objet à mesurer (48) et une face inférieure de l'objet à mesurer (48) repose sur la matrice (38),
- un dispositif de mesure (42) enregistre une distance entre le logement de poinçon (22) et un point zéro (81) du logement de matrice (21) et une distance entre l'objet à mesurer (48) et le point zéro (81) du logement de matrice (21), et
- via un dispositif d'évaluation (27), les distances enregistrées par le dispositif de mesure (42) sont évaluées et au moins une longueur de poinçon (61) pour le poinçon (36) et une hauteur de matrice (65) pour la matrice (38) ou une hauteur de matrice (65) pour la matrice (38) placée dans un adaptateur de matrice (69) sont fournies.

16. Procédé selon la revendication 15, **caractérisé en ce qu'**après la détection de la longueur du poinçon (61) et de la hauteur de la matrice (65), l'objet à mesurer (48) est déplacé dans la position de non-utilisation (51) et le logement de poinçon (22) est déplacé le long du guidage (17) vers la matrice (38), de sorte que le dispositif de mesure (42) détecte une plongée du poinçon (36) dans une ouverture (67) de la matrice (38).

17. Procédé selon l'une des revendications 15 ou 16, **caractérisé en ce qu'**à partir des valeurs de mesure de l'outil (35) enregistrées par le dispositif de mesure (42) dans le dispositif de préparation (11) est formé un ensemble de données spécifiques à l'outil qui est transmis à une base de données ou à un nuage ou à la machine d'usinage (28).
